# EUROPEAN PATENT SPECIFICATION

(11) **EP 1 529 997 B1**
(45) Date of publication and mention of the grant of the patent: **26.12.2012**
(21) Application number: 04105598.9
(22) Date of filing: 08.11.2004
(51) Int. Cl.: F16L 3/22, F16L 3/223, F16L 3/237, F16L 55/035

(54) **Multi-material isolator clip for supporting conduits**
Isolierender Leitungshalter aus mehreren Materialien
Support isolant de conduit fabriqué en plusieurs matériaux

(30) Priority: 10.11.2003 US 705539
(43) Date of publication of application: 11.05.2005
(73) Proprietor: ITT Manufacturing Enterprises, Inc., Wilmington, Delaware 19801 (US)
(72) Inventor: Miarka, James P., 48038, Clinton Township (US); Klinger, Gary O., 48307, Rochester Hills (US)
(74) Representative: Dreiss

(56) References cited:
- EP-A2- 1 013 978
- EP-A2- 1 058 067
- EP-A2- 1 122 477
- WO-A1-02/079682
- DE-U1- 9 401 393
- US-A- 5 769 556
- US-A1- 2003 010 874

## Description

### BACKGROUND

The present invention relates, in general, to clips for mounting cables, wires, tubes or pipes to a support structure, such as a vehicle body.

Various clips have been devised to mount elongate d parts, such as a fuel or brake line, accelerator cable, wire harness, to vehicle body structure or panels at prescribed locations. The clips which are unitary members typically include two portions, one receiving the article to be held and the other used to mount the clip to the vehicle body typically through an aperture in the body.

The article holding portion of such clips use pivotal covers which lock over an article inserted into the article holder or snap type arms which automatically hold an article in the clip after insertion past the arms. The arms bend apart on insertion and then snap back to engage a small width or diameter portion of the article to forcibly hold the article in the receiver portion of the clip.

The vehicle mounting portion of such clips can be a so -called "Christmas tree" shaped stem having spaced ridges which lockingly snap through an aperture in a vehicle body and engage a body or panel surface.

Such clips can also employ vibration absorbing material or vibration blocking features to isolate vibrations in the pipes, tubes or harnesses from the vehicle body. The vibration absorbing feature is typically provided by hollow, resilient portions in the fastener and/or by the use of vibration absorbing materials mounted in a portion of the clip between the article receiver portion and the vehicle body attachment portion.

Such clips have proven only limitedly effective in dampening vibrations from reaching the vehicle body. As a result, pulse dampeners are still commonly employed on vehicle fuel lines to dampen pulse vibrations.

Clips which employ vibration dampening materials typically are formed as two separate parts, one being the body of the clip and the other being the vibration dampening material which is first formed to shape and then inserted into the clip. This increases part count and overall clip cost due to the added assembly steps and assembly time.

From WO-A-02079682 a clip apparatus for receiving and mounting an article to a support is known. This apparatus comprises a body having at least one article receiver, a clip means carried on the body and releasibly engageable with an article for releasibly securing at least one article in the receiver, a vibration dampening material (5) carried on the body in a portion of the receiver and positioned to directly contact a portion of an article disposed in the receiver to dampen vibrations carried by the article, and a mount carried on the body for mounting the body to a support.

Thus, it would be desirable to provide a clip for mounting elongated articles such as tubes, pipes, cables and wires to vehicle bodies which effectively dampens vibrations in such parts from being transmitted through the clip to the vehicle body to which the clip is mounted. It would also be desirable to provide such a clip which can be efficiently assembled at a low manufacturing cost.

The present invention is a bundle clip for mounting elongated articles, such as wires, harnesses, pipes, tubes, etc., to a vehicle body structure.

In one aspect, the bundle clip includes a body having at least one tubular member receiver, at least one clip element carried on the body and releasibly engageable with the tubular member for releasibly securing the tubular member in the receiver, vibration dampening material carried on the body in a portion of the receiver and adapted to contact a portion of a tubular member disposed in the receiver to dampen vibrations in the tubular member and a mount carried on the body for mounting the body to a support surface.

The clip element includes inward extending, spaced clip arms cantilevered from support portions of the body for allowing insertion of an article through the clip arms into the receiver in the body to lock the article in the receiver.

The vibration dampening material is unitarily mounted to an inner surface of the receiver of the body in direct contact a portion of an article mounted in the body.

In one preferred embodiment, the body includes a base, a mount extending from the base for mounting the body to the support, a pair of side legs extending from opposite ends of the base and a center support extending from the base intermediate the side legs. At least one receiver is formed in the body between the center support and one of the side legs.

Another aspect of the invention is a method of forming a bundle clip for mounting elongated articles to vehicle body structure. The method includes the steps of

providing a body having at least one article receiver;

providing at least one c lip element on the body and releasibly engageable with the article for releasibly securing the article in the receiver;

providing vibration dampening material in at least a portion of the receiver and adapted to contact a portion of an article disp osed in the receiver to dampen vibrations carried by the article; and

providing a mount on the body for mounting the body to a support surface.

In another aspect, the method includes the step of providing the at least one clip element with an end portion disposed at an acute angle with respect to one of a side wall and a center wall of the body. A pair of spaced clip members may be carried on the body.

In another aspect, the method includes the step of providing the vibration dampening material layer as a unitary double shot molded, one piece assembly.

In another aspect, the method includes the step of providing the body with a base, a support mount extending from the base, at least one tubular article receiver extending between sidewalls and a center support extending from the base, the vibration dampening material are disposed about the center portion of the base.

In another aspect, the method includes the step of providing a post extending from the central support of the base, the post disposed between the two side legs of the base.

In another aspect, the method includes the step of providing a pair of cantilevered clip arms projecting from one side wall and the center post having ends extending toward each ot her.

In another aspect, the method includes the step of disposing the ends of the clip arms at acute angles with respect to the side wall and the center post.

In another aspect, the method includes the step of providing a rib connecting the article receiver to the base.

In another aspect, the method includes the step of forming voids in the body between the rib, the base and the article receiver.

In another aspect, the method includes the step of forming surface irregularities in the vibration dampening material.

In another aspect, the method includes the step of providing the at least one clip element with a pair of clip arms extending into the article receiver in the body.

The present bundle clip addresses de ficiencies found in previously devised bundle clips used to mount elongated articles, such as pipes, tubes, harnesses, cables, etc., to a vehicle body structure. In the present bundle clip, vibration dampening material is integrally carried in the bundle c lip body so as to be disposed in direct contact with at least a portion of an article mounted in the body to maximize vibration absorption from the article in order to minimize the transmission of vibrations from the article through the bundle clip to the vehicle body support structure

In one unique aspect, the vibration dampening material is double shot molded as the unitary part of the bundle clip body to minimize part count and reduce overall manufacturing costs. This also reduces assembly time s ince the entire bundle clip including the vibration dampening material is formed in a single assembly operation.

Although the vibration dampening material and the body are formed of dissimilar materials, mechanical connections between portions of t he vibration dampening material and the body are provided to fixedly and unitarily secure the vibration dampening material to the body.

### BRIEF DESCRIPTION OF THE DRAWING

The various features, advantages and other uses of the present invention will become more apparent by referring to the following detailed description and drawing in which:
Fig. 1 is a perspective view of a bundle clip according to one aspect of the present invention;
Fig. 2 is a cross-sectional view, generally taken along line 2 -2 of Fig. 1; and
Fig. 3 is a perspective view of another aspect of a bundle clip according to the present invention.

### DETAILED DESCRIPTION

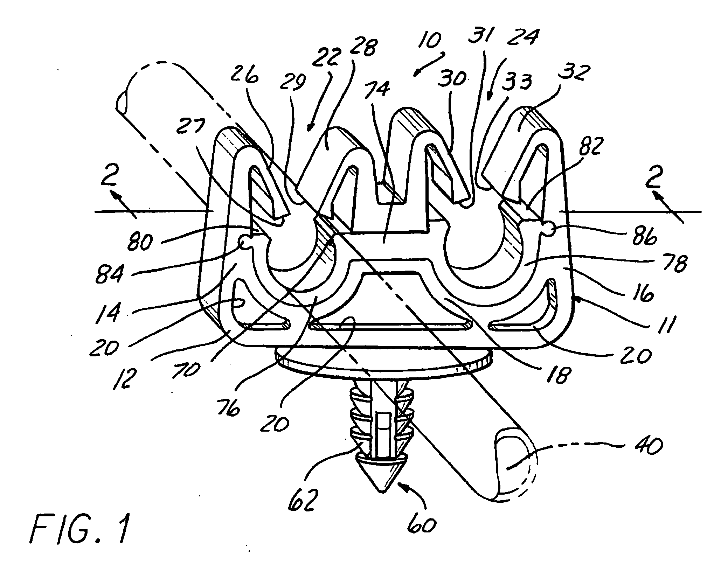

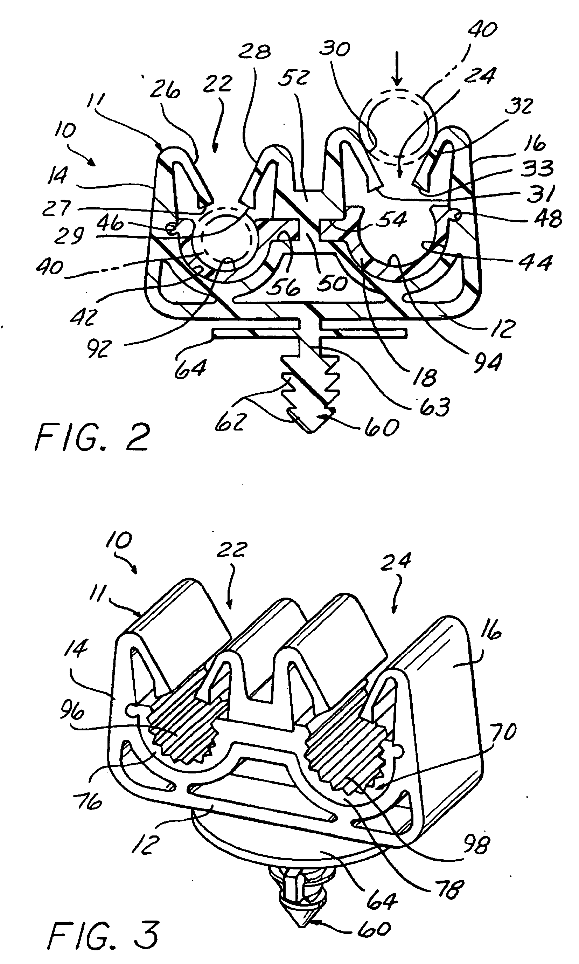

Refer now to the drawing, and to Figs. 1 and 2 in particular, there is depicted a bundle clip 10 constructed according to one aspect of the present invention, The bundle clip 10 comprises a one piece, unitary structure formed of a suitable, corrosive resistant material, such as plastic. Polyamides, such as Nylon 12, as well as other plastics made including polyole fins, etc., may be employed to form the main body of the bundle clip 10.

A main body 11 of the bundle clip 10 includes a base 12, a pair of sidewalls 14 and 16 projecting from the opposite ends of the base 12, and a central support 18 intermediate to the sidewalls 14 and 16. One or more apertures, with three apertures 20 being depicted by way of example only, may be formed in the body 11 of the bundle clip 10 for weight reduction purposes as well as to provide increased flexibility to the bundle clip 10.

At least one and preferably two or more pairs of clip means or elements 22 and 24 are formed in the body 11 of the bundle clip 10. Each clip means 22 and 24 includes at least one and, by example, a pair of angularly and inwardly extending arm s 26 and 28 for the clip means 22 and arms 30 and 32 for the clip means 24 which extend from the sidewalls 14 and 16 and the central support 18. Each clip arm 26, 28, 30 and 32 terminates in an inner end 27, 29, 31 and 33, respectively. The inner ends 27 and 29 as well as the inner ends 31 and 33 are spaced apart from each other and from the adjacent portions of the side legs 14 and the central support 18 to provide a cantilever action which allows the elongated, generally tubular article or member 40 to be forcibly inserted through the opening between inner ends 26 and 28 or 31 and 33 forcing the inner ends of the arms 26 and 28 or 30 and 32 apart allowing passage of the larger diameter article 40 there past. Once the major diameter portion of the article 4 0 has been inserted past the inner ends 27 and 29 or 31 and 33 of the clips 22 and 24, the inner ends 27, 29, 31 and 33 snap back or move oppositely to their normal position shown in Fig. 1 to forcibly retain the article 40 in a conforming article receiver or cavity 42 or 44 in the body of the bundle clip 10. The receiver article 40 has a hemispherical, semi-circular, concave shape.

A mounting slot 46 and 48 is formed in an inner surface of each side leg 14 and 16, for purposes which will become mor e apparent hereafter.

The central support 18 includes a post 50 which terminates in a block 52 from which the inner pair of clip arms 28 and 30 extend. The post 50 defines a reduced diameter, generally cylindrically shaped portion, between an inner surface 54 of the block 52 and an opposed surface 56 of the central support 18.

As shown in Figs. 1 and 2, a mounting means 60 is provided for integrally mounting the bundle clip 10 to a vehicle body, typically through an aperture in the vehicle body, in a snap-in fit. The mounting means 60 by example only, comprises a Christmas tree shaped mount formed of a plurality of conical shaped ribs 62 which are spaced along the length of the stem 63 from a generally planar stop 64 which is connected to and spaced from the base 12 of the body 11 of the bundle clip 10.

In use, the mounting means 60 is inserted into an aperture, not shown, in the vehicle body until the stop 64 contacts the vehicle sheet metal or panel. The innermost edges of the innermost conical shaped portion 62 of the mounting means 60 will engage the opposite side of the panel or sheet metal to lock the bundle clip 10 to the vehicle body.

According to the present invention, a vibration dampening or absorbing layer 70 is mounted on the body 11. The vibration dampening or absorbing material 70 may be formed of any suitable typically resilient material, such as thermoplastic elastomer (TPE), a thermoplastic rubber (TPR), or other rubber -like elastomers, such as nitryle rubber, etc.

According to unique features of the present invention, the vibration absorbing member 70 is mounted in the receiver 40 and 42 of the body 11 in a position to directly contact the article 40 mounted in the receiver 40 or 42. This provides more effective vibration dampening as the vibration dampening member 70 is disposed in direct contact with the vibration carrying articles 40.

The vibration dampening member 70 has a shape complementary to the shape of the receivers 42 or 44 in the rece iver 11. It will be understood that the following description of the shape of the vibration dampening member 70 as having two internal receivers or cavities for receiving two articles also applies equally to a vibration dampening material which has only a single cavity for receiving one article or more than two cavities for receiving multiple articles.

The vibration dampening material or member 70 includes a center portion 74, a pair of concave shaped article contacting portions 76 and 78 of generally concave, semi-circular shape, which terminate in a pair of outer ends 80 and 82, respectively. Projections 84 and 86 are formed in end portions of the article receiver 76 and 78, generally adjacent to the ends 80 and 82, for connection to the recesses 46 and 48 in the side legs 14 and 16, respectively, of the body 11.

The body 11 and the vibration absorbing material 70 may be double shot molded in a single mold cavity in a two step operation of two different materials so that the article vibration member 70 is formed to the illustrated shape and is mechanically mounted to the body 11 by the projections 84 and 86 extending into the recesses 46 and 48 in the side legs 14 and 16 and the continuous, uninterrupted disposition of material forming the base 74 of the vibration dampening member 70 about the post 50. This enables the vibration dampening bundle clip 10 of the present invention, even though formed of two dissimilar materials, to nevertheless be constructed in a single assembly operation for reduced part count and a low manufacturing cost.

As shown in Fig. 2, when an article 40 is inserted past the clip means 22 and/or 24 into engagement with the inner surfaces 92 and 94 in the article contacting portions 76 and 78 of the vibration dampening member 70, an opposite end portion of the article 40 will be forcibly engaged with the inner ends 27 and 29 or 31 and 33 of the clip legs 26, 28, 30 and 32 which forcibly holds each article 40 in fixed, direct contact about a major portion of its peri pheral surface with the inner surfaces 92 and 94 of the article contacting portions 76 and 78 of the vibration dampening member 70. This provides efficient vibration transmission from the article 40 to vibration dampening member 70 wherein the vibration is absorbed, dampened or attenuated to a significant degree such that little if any vibration is transmitted from the vibration dampening member 70 to the outer portions of the body 11 which contacts the vehicle body structure.

Refer now to Fig. 3, there is depicted a modification to the vibration dampening member 70 in which an inner surface of each article contacting portion 76 and 78 of the vibration absorbing member 70 is formed with surface irregularities 96 or 98. This provides an irregular surf ace for more securely holding the article 40 in a fixed, immovable position within the article receiving cavities 76 and 78 of the vibration dampening member 70 to resist creation of additional vibrations in the article 40. The surface irregularities 96 an d 98 may take a variety of shapes, including random projections and recesses, elongated, generally parallel grooves or ridges with either sharp or smooth apexes and depressions, etc. Such surface irregularities 96 and 98 are provided by the mold used to sh ape the inner surface of the article receiving portion 76 and 78 of the vibration dampening member 70.

In conclusion, there has been disclosed a unique multi-material, vibration isolating bundle clip suitable for fixedly mounting elongated articles to vehicle body structure while at the same time absorbing substantially all of any vibrations transmitted along or induced in the elongated articles to prevent the vibrations from passing through the clip and the vehicle body to the passenger compartment. The inventive bundle clip is formed of a body having an article receiving portion and a mounting portion, with a vibration dampening material mounted integrally within the article receiving portion and positioned for direct contact with at least a portio n of the article mounted in the bundle clip. The vibration dampening material and the body of the bundle clip are double shot molded in a single, unitary part to minimize part count and to reduce manufacturing cost.

## Claims

1. A clip apparatus (10) for receiving and mounting an article (40) to a support (18), the apparatus (10) comprising:
a body (11) having a base (12), sidewalls (14, 16) coextending from the base (12), a post (50) attached to the base (12) and located between the sidewalls (14, 16), and at least one article receiver (42, 44) between the sidewalls (14, 16);
a clip means (22, 24) carried on the body (11) and releasibly engagable with an article (40) for releasibly securing at least one article (40) in the receiver (42, 44); **characterized by**
a vibration dampening material (70) located in a portion of the receiver (42, 44) and secured with the post (50) to directly contact a portion of an article (40) disposed in the receiver (42, 44) to dampen vibrations carried by the article (40); and
a mount (60) carried on the body (11) for mounting the body (11) to a support (18).

2. The clip apparatus (10) of claim 1 wherein the body (11) comprises:
a support mount (60); and
a center support (74) extending from the base (12), the post (50) extending from the center support (74).

3. The clip apparatus (10) of claim 2 wherein the clip means (22, 24) comprises:
a pair of cantilevered clip arms (26, 28; 30; 32) projecting from one sidewall (14, 16) and the post (50) toward each other.

4. The clip apparatus (10) of claim 3 wherein:
the clip arms (26, 28; 30; 32) are disposed at an acute angle with respect to the side wall center (14, 16) and post.

5. The clip apparatus (10) of claim 2 further comprising:
a rib (62) connecting each receiver (42, 44) to the base (12).

6. The clip apparatus (10) of claim 5 further comprising:
voids formed in the body (11) between the rib (62), the base (12) and the receiver (42, 44).

7. The clip apparatus (10) of at least one of claims 1 to 6 further comprising:
surface irregularities (96, 98) formed in the vibration dampening material (70) facing an article (40) inserted in the body (11).

8. A method of making a bundle clip (10) according to claim 1.

9. A method for mounting an article (40) to a support (18), the method comprising
the steps of providing a body (11) having a base (12), sidewalls (14, 16) coextending from the base (12), a post (50) attached to the base (12) and located between the sidewalls (14, 16), and at least one article receiver (42, 44) between the sidewalls (14, 16);
providing at least one clip element (26, 28, 30, 32) on the body (11) releasibly engagable with the article (40) for releasibly securing an article (40) in the receiver (42, 44); **characterized by**
securing a vibration dampening material (70) to the post and in at least a portion of the receiver (42, 44) positioned to contact a portion of an article (40) disposed in the receiver (42, 44) to dampen vibrations in the article (40); and providing a mount (60) on the body (11) for mounting the body (11) to a support (18).

10. The method of claim 9 further comprising the steps of:
forming the vibration dampening material (70) with a surface (92, 94) positioned to contact an article (40) inserted into the body (11); and
forming surface irregularities (96, 98) on the surface (92, 94).

11. The method of claim 9 wherein the step of providing the body (11) further comprises the steps of
forming the body (11) with a support mount (60) extending from the base (12), and a center support (74) extending from the base (12), with the post (50) extending from the center support (74).

12. The method of claim 11 further comprising the step of
forming at least a portion of the clip means (22, 24) on the post (50) ; and mounting a portion of the vibration dampening material (70) about the post.

13. The method of claim 11 further comprising the step of forming a rib (62) between the base (12) and the receiver (42, 44).

14. The clip apparatus (10) of claim 1, wherein the vibration dampening material (70) comprises a single, unitary piece having at least two concave-shaped article contacting sections (76, 78), one concave-shaped article contacting section (76, 78) being an one side of the post (50) and the other concave-shaped article contacting section (76, 78) being on an opposite side of the post (50).

15. The clip apparatus (10) of claim 1, wherein the post (50) is cylindrical.

16. The clip apparatus (10) of claim 15, wherein the vibration dampening material (70) is molded entirely around a circumference of the post (50).

17. The clip apparatus (10) of claim 1. wherein the vibration dampening material (70) is molded entirely around the post such that the post (50) limits lateral movement of the vibration dampening material (70) relative to the sidewalls (14, 16).

18. The clip apparatus (10) of claim 1, wherein the vibration dampening material (70) comprises a single, unitary piece having two concave-shaped article contacting sections (76, 78) connected by a bridge section, each concave-shaped article contacting section (76, 78) having a projection that is received within a recess of one of the sidewalls (14, 16) and wherein the bridge section is molded around the post (50) to secure the vibration dampening material (70) to the body (11).

19. The clip apparatus (10) of claim 1, wherein the body (11) includes a center support (74) extending from the base (12) and the post (50) having one end connected with the center support (74) and another end connected with a block (52).

20. The clip apparatus (10) of claim 19, wherein the clip means (28, 30) comprises at least one clip arm extending from the block (52).

## Patentansprüche

1. Halter (10) zum Aufnehmen und Befestigen eines Gegenstandes (40) an einer Tragvorrichtung (18), wobei der Halter (10) aufweist:
einen Körper (11) mit einem Sockel (12), sich vom Sockel (12) gemeinsam erstreckende Seitenwände (14, 16), einen am Sockel (12) angebrachte und zwischen den Seitenwänden (14, 16) befindlichen Ständer (50) und mindestens eine Gegenstandsaufnahme (42, 44) zwischen den Seitenwänden (14, 16);
eine auf dem Körper (11) getragene und mit einem Gegenstand (40) lösbar in Eingriff zu bringende Halteeinrichtung (22, 24) zum lösbaren Festhalten mindestens eines Gegenstandes (40) in der Aufnahme (42, 44);
**gekennzeichnet durch** ein schwingungsdämpfendes Material (70), das sich in einem Abschnitt der Aufnahme (42, 44) befindet und mit dem Ständer (50) sicher angebracht ist, um einen Abschnitt eines in der Aufnahme (42, 44) angeordneten Gegenstandes (40) direkt zu berühren mit dem Ziel, vom Gegenstand (40) getragene Schwingungen zu dämpfen; und
eine auf dem Körper (11) getragene Befestigung (60) zum Befestigen des Körpers (11) an einer Stütze (18).

2. Halter (10) nach Anspruch 1, wobei der Körper (11) aufweist:
eine Stützbefestigung (60); und
eine sich von dem Sockel (12) erstreckende Mittelstütze (74), wobei der Ständer (50) sich von der Mittelstütze (74) erstreckt.

3. Halter (10) nach Anspruch 2, wobei die Halteeinrichtung (22, 24) aufweist:
ein Paar überkragendende Haltearme (26, 28; 30; 32), die von einer Seitenwand (14, 16) und dem Ständer (50) in Richtung zueinander vorspringen.

4. Halter (10) nach Anspruch 3, wobei:
die Haltearme (26, 28; 30; 32) in einem spitzen Winkel in Bezug auf die Seitenwandmitte (14, 16) und den Ständer angeordnet sind.

5. Halter (10) nach Anspruch 2, ferner mit:
einer Rippe (62), die jede Aufnahme (42, 44) mit dem Sockel (12) verbindet.

6. Halter (10) nach Anspruch 5, ferner mit:
im Körper (11) zwischen der Rippe (62), dem Sockel (12) und der Aufnahme (42, 44) gebildeten Hohlräumen.

7. Halter (10) nach mindestens einem der Ansprüche 1 bis 6, ferner mit:
in dem schwingungsdämpfenden Material (70) gebildeten Oberflächenunregelmäßigkeiten (96, 98), die einem in den Körper (11) eingesetzten Gegenstand (40) zugewandt sind.

8. Verfahren zum Herstellen eines Bündelhalters (10) nach Anspruch 1.

9. Verfahren zum Befestigen eines Gegenstandes (40) an einer Stütze (18), wobei das Verfahren die Schritte beinhaltet zum Bereitstellen eines Körpers (11) mit einem Sockel (12), sich vom Sockel (12) gemeinsam erstreckenden Seitenwänden (14, 16), einem am Sockel (12) angebrachten und zwischen den Seitenwänden (14, 16) befindlichen Ständer (50) und mindestens einer Gegenstandsaufnahme (42, 44) zwischen den Seitenwänden (14, 16);
Bereitstellen mindestens eines Halteelements (26, 28, 30, 32) auf dem Körper (11), das mit dem Gegenstand (40) lösbar in Eingriff zu bringen ist, zum lösbaren Festhalten eines Gegenstandes (40) in der Aufnahme (42, 44);
**gekennzeichnet durch** das sichere Anbringen eines schwingungsdämpfenden Materials (70) an dem Ständer und in mindestens einem Abschnitt der Aufnahme (42, 44), das positioniert wird, um einen Abschnitt eines in der Aufnahme (42, 44) angeordneten Gegenstandes (40) zu berühren mit dem Ziel, Schwingungen im Gegenstand (40) zu dämpfen; und
Bereitstellen einer Befestigung (60) auf dem Körper (11) zum Befestigen des Körpers (11) an einer Stütze (18).

10. Verfahren nach Anspruch 9, ferner mit folgenden Schritten:
Bilden des schwingungsdämpfenden Materials (70) mit einer Oberfläche (92, 94), das positioniert wird, um einen in den Körper (11) eingesetzten Gegenstand (40) zu berühren; und
Bilden von Oberflächenunregelmäßigkeiten (96, 98) auf der Oberfläche (92, 94).

11. Verfahren nach Anspruch 9, wobei der Schritt des Bereitstellens des Körpers (11) ferner folgende Schritte beinhaltet:
Bilden des Körpers (11) mit einer sich von dem Sockel (12) erstreckenden Stützbefestigung (60) und einer sich von dem Sockel (12) erstreckenden Mittelstütze (74), wobei der Ständer (50) sich von der Mittelstütze (74) erstreckt.

12. Verfahren nach Anspruch 11, ferner mit folgendem Schritt:
Bilden mindestens eines Abschnitts der Halteeinrichtungen (22, 24) auf dem Ständer (50); und Befestigen eines Abschnitts des schwingungsdämpfenden Materials (70) um den Ständer herum.

13. Verfahren nach Anspruch 11, ferner mit dem Schritt des Bildens einer Rippe (62) zwischen dem Sockel (12) und der Aufnahme (42, 44).

14. Halter (10) nach Anspruch 1, wobei das schwingungsdämpfende Material (70) ein einzelnes, zusammenhängendes Stück mit mindestens zwei konkav geformten, den Gegenstand berührenden Abschnitten (76, 78) aufweist, wobei ein konkav geformter, den Gegenstand berührender Abschnitt (76, 78) sich auf einer Seite des Ständers (50) und der andere konkav geformte, den Gegenstand berührende Abschnitt (76, 78) sich auf einer gegenüberliegenden Seite des Ständers (50) befindet.

15. Halter (10) nach Anspruch 1, wobei der Ständer (50) zylindrisch ist.

16. Halter (10) nach Anspruch 15, wobei das schwingungsdämpfende Material (70) vollständig um einen Umfang des Ständers (50) herum geformt ist.

17. Halter (10) nach Anspruch 1, wobei das schwingungsdämpfende Material (70) vollständig um den Ständer herum geformt ist dergestalt, dass der Ständer (50) eine seitliche Bewegung des schwingungsdämpfenden Materials (70) in Bezug auf die Seitenwände (14, 16) begrenzt.

18. Halter (10) nach Anspruch 1, wobei das schwingungsdämpfende Material (70) ein einzelnes, zusammenhängendes Stück mit zwei konkav geformten, den Gegenstand berührenden und über einen Brückenabschnitt verbundenen Abschnitten (76, 78) aufweist, wobei jeder konkav geformte, den Gegenstand berührende Abschnitt (76, 78) einen Vorsprung besitzt, der in eine Vertiefung in einer der Seitenwände (14, 16) aufgenommen wird, und wobei der Brückenabschnitt um den Ständer (50) herum geformt wird, um das schwingungsdämpfende Material (70) am Körper (11) zu sichern.

19. Halter (10) nach Anspruch 1, wobei der Körper (11) eine sich von dem Sockel (12) erstreckende Mittelstütze (74) besitzt und ein Ende des Ständers (50) mit der Mittelstütze (74) verbunden ist und ein anderes Ende mit einem Block (52) verbunden ist.

20. Halter (10) nach Anspruch 19, wobei die Halteeinrichtung (28, 30) mindestens einen sich von dem Block (52) erstreckenden Haltearm aufweist.

## Revendications

1. Système de support (10) destiné à recevoir et à monter un article (40) sur un support (18), le système de support (10) comprenant:
un corps (11) ayant une base (12), des parois latérales (14, 16) qui s'étendent à partir de la base (12), un montant (50) fixé à la base (12) et situé entre les parois latérales (14, 16), et au moins une partie réceptrice d'article (42, 44) entre les parois latérales (14, 16);
des moyens formant support (22, 24) portés par le corps (11) et pouvant s'engager, de manière détachable, sur un article (40) afin de fixer, de manière détachable, au moins un article (40) dans la partie réceptrice (42, 44);
**caractérisé par**
un matériau amortisseur de vibrations (70) situé dans une portion de la partie réceptrice (42, 44) et fixé sur le montant (50) afin d'entrer directement en contact avec une portion d'un article (40) disposé dans la partie réceptrice (42, 44) dans le but d'amortir les vibrations subies par l'article (40); et
une coupelle support (60) portée par le corps (11) afin d'assurer le montage du corps (11) sur un support (18).

2. Système de support (10) selon la revendication 1, dans lequel le corps (11) comprend:
une coupelle support (60); et
un support central (74) qui s'étend à partir de la base (12), le montant (50) s'étendant à partir du support central (74).

3. Système de support (10) selon la revendication 2, dans lequel les moyens formant support (22, 24) comprennent:
une paire de bras de support en porte-à-faux (26, 28; 30; 32) qui font saillie à partir d'une paroi latérale (14, 16) et du montant (50) l'un vers l'autre.

4. Système de support (10) selon la revendication 3, dans lequel:
les bras de support (26, 28; 30; 32) sont disposés suivant un angle aigu par rapport au centre de la paroi latérale (14, 16) et du montant.

5. Système de support (10) selon la revendication 2, comprenant en outre:
une arête (62à) raccordant chaque partie réceptrice (42, 44) à la base (12) .

6. Système de support (10) selon la revendication 5, comprenant en outre:
des vides formés dans le corps (11) entre l'arête (62), la base (12) et la partie réceptrice (42, 44).

7. Système de support (10) selon au moins l'une des revendications 1 à 6, comprenant en outre:
des irrégularités de surface (96, 98) formées dans le matériau amortisseur de vibrations (70) qui fait face à un article (40) inséré dans le corps (11).

8. Procédé de fabrication d'un support de faisceau (10) selon la revendication 1.

9. Procédé de montage d'un article (40) sur un support (18), le procédé comprenant les étapes de fourniture d'un corps (11) ayant une base (12), des parois latérales (14, 16) qui s'étendent à partir de la base (12), un montant (50) fixé sur la base (12) et situé entre les parois latérales (14, 16) et au moins une partie réceptrice d'un article (42, 44) entre les parois latérales (14, 16);
la fourniture d'au moins un élément de support (26, 28, 30, 32) sur le corps (11) pouvant s'engager de manière détachable sur l'article (40) afin de fixer, de manière détachable, un article (40) dans la partie réceptrice (42, 44); **caractérisé par**
la fixation d'un matériau amortisseur de vibrations (70) sur le montant et dans au moins une portion de la partie réceptrice (42, 44) placée de manière à entrer en contact avec une portion d'un article (40) disposé dans la partie réceptrice (42, 44) afin d'amortir des vibrations dans l'article (40); et
la fourniture d'une coupelle (60) sur le corps (11) pour le montage du corps (11) sur un support (18).

10. Procédé selon la revendication 9 comprenant en outre les étapes de:
formation du matériau amortisseur de vibrations (70) avec une surface (92, 94) placée de manière à entrer en contact avec un article (40) inséré dans le corps (11); et
formation d'irrégularités de surface (96, 98) sur la surface (92, 94).

11. Procédé selon la revendication 9, dans lequel l'étape de fourniture du corps (11) comprend en outre les étapes de formation du corps (11) avec un bâti-support (60) qui s'étend à partir de la base (12), et un support central (74), le montant (50) s'étendant à partir du support central (74).

12. Procédé selon la revendication 11, comprenant en outre l'étape de
formation d'au moins une portion des moyens formant support (22, 24) sur le montant (50); et montage d'une portion du matériau amortisseur de vibrations (70) autour du montant.

13. Procédé selon la revendication 11, comprenant en outre l'étape de formation d'une arête (62) entre la base (12) et la partie réceptrice (42, 44).

14. Système de support (10) selon la revendication 1, dans lequel le matériau amortisseur de vibrations (70) comprend une pièce unique, en une seule partie possédant au moins deux sections de contact d'article de forme concave (76, 78), une section de contact d'article de forme concave (76, 78) se trouvant d'un côté du montant (50) et l'autre section de contact d'article de forme concave (76, 78) se trouvant sur un côté opposé du montant (50).

15. Système de support (10) selon la revendication 1, dans lequel le montant (50) est cylindrique.

16. Système de support (10) selon la revendication 15, dans lequel le matériau amortisseur de vibrations (70) est moulé intégralement autour d'une circonférence du montant (50).

17. Système de support (10) selon la revendication 1, dans lequel le matériau amortisseur de vibrations (70) est moulé intégralement autour du montant de telle manière que le montant (50) limite le déplacement latéral du matériau amortisseur de vibrations (70) par rapport aux parois latérales (14, 16).

18. Système de support (10) selon la revendication 1, dans lequel le matériau amortisseur de vibrations (70) comprend une pièce unique, en une seule partie possédant deux sections de contact d'article de forme concave (76, 78) reliées par une section formant pont, chaque section de contact d'article de forme concave (76, 78) présentant une saillie qui est reçue dans un évidement de l'une des parois latérales (14, 16) et dans lequel la section formant pont est moulée autour du montant (50) afin de fixer le matériau amortisseur de vibrations (70) sur le corps (11).

19. Système de support (10) selon la revendication 1, dans lequel le corps (11) inclut un support central (74) qui s'étend à partir de la base (12) et le montant (50) possédant une extrémité raccordée au support central (74) et une autre extrémité raccordée à un bloc (52).

20. Système de support (10) selon la revendication 19, dans lequel les moyens formant support (28, 30) comprennent au moins un bras de support qui s'étend à partir du bloc (52).
